# EUROPÄISCHE PATENTSCHRIFT

(11) **EP 1 971 506 B1**
(45) Veröffentlichungstag und Bekanntmachung des Hinweises auf die Patenterteilung: **31.03.2010**
(21) Anmeldenummer: 06805634.0
(22) Anmeldetag: 18.07.2006
(51) Int. Cl.: B60S 1/08, G01N 27/22

(54) **SENSORANORDNUNG ZUR ERFASSUNG DER FEUCHTE AUF EINER SCHEIBE**
SENSOR ARRAY FOR THE DETECTION OF HUMIDITY ON A WINDOW
SYSTEME DETECTEUR DESTINE A LA DETECTION D'HUMIDITE SUR UNE VITRE

(30) Priorität: 19.07.2005 DE 102005033557; 30.06.2006 DE 102006030208
(43) Veröffentlichungstag der Anmeldung: 24.09.2008
(73) Patentinhaber: Preh GmbH, 97616 Bad Neustadt a.d. Saale (DE)
(72) Erfinder: RIENECKER, Maik, 97618 Wollbach (DE)
(74) Vertreter: Bauer, Wulf
(86) Internationale Anmeldenummer: PCT/EP2006/007043
(87) Internationale Veröffentlichungsnummer: WO 2007/009743

(56) Entgegenhaltungen:
- WO-A-01/81931
- WO-A2-03/060499
- DE-A1- 4 228 737
- DE-A1-102004 050 345

## Beschreibung

Die Erfindung betrifft eine Sensoranordnung zur Erfassung der Feuchte und/oder von Tropfen auf einer Scheibe, insbesondere einer Windschutzscheibe eines Kraftfahrzeuges, gemäß dem Oberbegriff des Anspruchs 1.

Eine derartige Sensoranordnung ist aus der WO 01/81931 A1 bekannt. Solche Sensoranordnungen sind z.B. in Fahrzeugen eingesetzt, um automatisch Scheibenwischer und/oder Gebläse zu steuern.

Die DE 196 02 354 A1 offenbart einen Sensor zur Erfassung der Feuchtigkeit auf einer Scheibe eines Kraftfahrzeugs, bei dem mindestens eine elektrisch leitende Schicht in einem bestimmten Muster auf einer Aussenfläche der Scheibe angeordnet ist. Der Sensor wertet den elektrischen Widerstand aus, der zwischen zwei Schichten mit unterschiedlichem elektrischen Potential besteht und sich mit der Wassermenge auf der Scheibe ändert.

Die DE 101 52 998 C2 beschreibt eine Sensoreinheit zur Detektion einer Benetzung einer Scheibe mit zwei Sensoren, die nach dem kapazitiven Prinzip arbeiten. Einer der Sensoren ist zum Erfassen eines Beschlags der Innenseite der Scheibe, der andere zur Erfassung eines äusseren Beschlags. Die Sensoren sind mit einer Auswerteeinheit verbunden, die in der Sensoreinheit eingebunden ist.

Die DE 197 23 858 A1 beschreibt eine Vorrichtung zum Beheizen einer Scheibe, bei der eine Scheibenheizung in Abhängigkeit von einer Benetzung der Scheibe gesteuert wird. Diese Benetzung wird durch einen Feuchtigkeitssensor erfasst, der z.B. als kapazitiver Sensor aufgebaut ist.

Aus der EP 710 593 A1 ist ein Sensor zur kapazitiven Messung der Benetzungsdichte auf einer Scheibe bekannt. Auf einer der Flüssigkeit abgewandten Seite oder in der Scheibe sind Leiterbahnen angeordnet, die einen Kondensator bilden und eine kammartige oder fingerartige Struktur aufweisen. Die Leiterbahnen sind mit einer Messeinrichtung zur Bestimmung der Kapazität verbunden.

Dem Anmelder ist eine Temperaturkompensation für einen kapazitiven Regensensor bekannt, bei der eine Temperatur der Scheibe mittels eines separaten Temperatursensors - zum Beispiel einem Widerstandsthermometer - gemessen und als Korrekturwert auf die an dem Regensensor anliegende Kapazität aufgeschaltet wird. Diese Temperaturkompensation erfordert einen separaten Sensor und einen relativ großen Rechenaufwand.

Aufgabe der Erfindung ist es, die Sensoranordnung der eingangs genannten Art zu verbessern, wobei die Temperaturkompensation mit einfachen und preisgünstigen Mitteln durchgeführt werden kann.

Die Aufgabe wird gelöst durch die Merkmale des Anspruchs 1.

Die Unteransprüche betreffen vorteilhafte Ausgestaltungsvarianten der Erfindung.

Der Verlauf der Feldlinien des zweiten Kondensators zwischen den Elektroden und der den Elektroden abgewandten Oberfläche der Scheibe gemäß Anspruch 2 bewirkt, dass die Feldlinien im Wesentlichen innerhalb der Scheibe verlaufen und daher ausschließlich durch die Temperatur der Scheibe beeinflusst werden. Dem den Sensoren nachgeschalteten Regelkreis steht somit ein definierter Temperaturwert zur Verfügung.

Die Anordnung des zweiten Kondensators auf der Leiterplatte nach Anspruch 3 vereinfacht die Herstellung sowie die Montage und ergibt eine kompakte Sensoranordnung.

Der aufgeklappte Plattenkondensator nach Anspruch 4 ist einfach durch Aufbringen entsprechender Elektroden auf der Leiterplatte herzustellen.

Die Erfindung wird anhand der in der Zeichnung vereinfacht dargestellten Beispiele weiter erläutert. Es zeigen
Figur 1 eine Draufsicht auf eine erfindungsgemäße Sensoranordnung und
Figur 2 einen Querschnitt durch die Sensoranordnung (vergrößert gegen Figur 1).

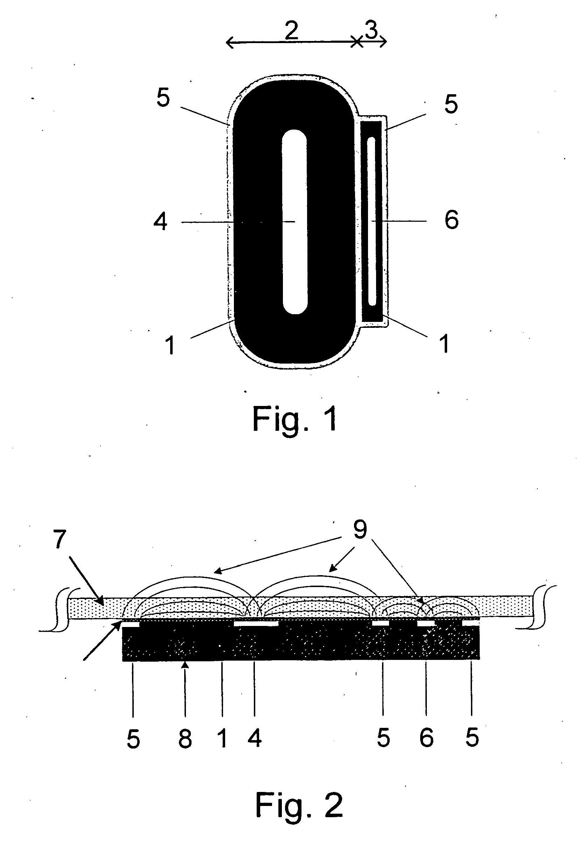

Wie aus Figur 1 ersichtlich sind auf einer ersten Hauptfläche einer Leiterplatte 1 ein Messkondensator 2 und angrenzend ein zweiter Kondensator 3 in einer als parallel beschreibbaren Anordnung nebeneinander angeordnet.

Der Messkondensator 2 ist nach Art eines aufgeklappten Kondensators aufgebaut und umfasst eine erste Elektrode 4 in Form eines schmalen Rechtecks mit gerundeten Ecken. Um die erste Elektrode 4 ist eine zweite Elektrode 5 so geführt, dass zwischen beiden ein im Wesentlichen konstanter Abstand besteht.

Der zweite Kondensator 3 umfasst eine dritte Elektrode 6 und die zweite Elektrode 5 und ist im Wesentlichen aufgebaut wie der Messkondensator 2 mit dem Unterschied, dass die dritte Elektrode 6 schmaler ist als die erste Elektrode 4 und deren Abstand zur zweiten Elektrode 5 geringer ist. Die zweite Elektrode 5 ist hierbei als gemeinsame Elektrode für den Messkondensator 2 und für den zweiten Kondensator 3 ausgeführt und hat die Form einer stilisierten, abgeflachten Acht.

Wie aus Figur 2 ersichtlich ist die Leiterplatte 1 so an einer Scheibe 7, insbesondere einer Windschutzscheibe eines Fahrzeugs, befestigt, dass die Elektroden 4, 5, 6 an der Scheibe 7 anliegen. Die Elektroden sind an eine Spannungsquelle anschließbar und mit einer Auswerteeinrichtung verbunden. An einer zweiten, der Scheibe 7 abgewandten Hauptfläche der Leiterplatte 1 sind nicht dargestellt die elektrischen Anschlüsse und die Auswerteeinrichtung angeordnet, wobei die elektronischen Komponenten in einem Bereich 8 unmittelbar auf der Leiterplatte 1 anordbar sind. Die Auswerteeinrichtung umfasst eine Vorrichtung zur Bestimmung der Kapazität und Mittel zur Differenzbildung.

Im Betrieb, zum Beispiel mit Einschalten der Zündung des Fahrzeugs, wird Spannung auf die Sensoranordnung gegeben. Infolge der Spannung bilden sich Feldlinien 9 zwischen den Elektroden 4, 5, 6 aus, die in Figur 2 schematisch dargestellt sind. Hierbei ist es wesentlich, dass der Messkondensator 2 so ausgelegt ist, dass die zugehörigen Feldlinien 9 zumindest teilweise durch die Scheibe 7 und in den Raum hinter der zweiten Hauptfläche der Scheibe 7 wirken. Die Feldlinien 9 des zweiten Kondensators 3 dagegen wirken aufgrund seiner Auslegung ausschließlich innerhalb der Scheibe 7; daher wird das Potential des zweiten Kondensators 3 ausschließlich durch die Temperatur beeinflusst, während äußere Einflüsse wie zum Beispiel Regentropfen keine Wirkung darauf haben. Die Potentiale des Messkondensators 2 und des zweiten Kondensators 3 werden in der Auswerteeinrichtung bestimmt und eine Differenz der Potentiale ermittelt. Diese Differenz ist ein Maß für Feuchtigkeit und/oder Tropfen auf der Scheibe 7 und wird auf bekannte Weise zum Beispiel für das Ein- und Ausschalten eines Scheibenwischers genutzt.

## Patentansprüche

1. Sensoranordnung zur Erfassung der Feuchte und/oder von Tropfen auf einer Oberfläche einer Scheibe (7), insbesondere einer Windschutzscheibe eines Kraftfahrzeuges, mit einer Leiterplatte (1), mit einem auf der Leiterplatte (1) angeordneten Messkondensator (2) zur Erfassung der Feuchte und/oder der Tropfen und mit einer Auswerteeinrichtung, wobei zur Kompensation von Temperaturunterschieden ein zweiter Kondensator (3) auf der Scheibe angeordnet ist, dessen Feldlinien (9) in die Scheibe (7) hineinreichen, der Messkondensator (2) eine erste Elektrode (4) und eine zweite Elektrode (5) aufweist, die zweite Elektrode (5) als gemeinsame Elektrode für den Messkondensator (2) und für den zweiten Kondensator (3) ausgeführt ist, der zweite Kondensator (3) neben der zweiten Elektrode (5) eine dritte Elektrode (6) aufweist, und der zweite Kondensator (3) im Wesentlichen aufgebaut ist wie der Messkondensator (2),
**dadurch gekennzeichnet, dass** die zweite Elektrode (5) die Form einer stilisierten, abgeflachten Acht aufweist, dass die zweite Elektrode (5) so um die erste Elektrode (4) herum geführt ist, dass zwischen beiden ein im Wesentlichen konstanter Abstand besteht, und dass die erste Elektrode (4) in Form eines schmalen Rechtecks mit gerundeten Ecken ausgebildet ist.

2. Sensoranordnung nach Anspruch 1, **dadurch gekennzeichnet, dass** der zweite Kondensator (3) so ausgelegt ist, dass seine Feldlinien zwischen seinen Elektroden (4, 5) und der den Elektroden (4, 5) abgewandten Oberfläche der Scheibe (7) verlaufen.

3. Sensoranordnung nach Anspruch 1 oder 2, **dadurch gekennzeichnet, dass** der zweite Kondensator (3) auf der Leiterplatte (1) angeordnet ist.

4. Sensoranordnung nach einem der Ansprüche 1 bis 3, **dadurch gekennzeichnet, dass** der Messkondensator (2) und der zweite Kondensator (3) nach Art eines aufgeklappten Kondensators ausgeführt sind.

5. Sensoranordnung nach einem der Ansprüche 1 bis 4, **dadurch gekennzeichnet, dass** die Auswerteeinrichtung auf der Leiterplatte (1) angeordnet ist.

## Claims

1. A sensor arrangement for sensing the humidity and/or drops on the surface of a pane (7), in particular of a windshield of a motor vehicle, with a printed circuit board (1), with a precision capacitor (2) disposed on said printed circuit board (1) for sensing the humidity and/or the drops and with an evaluation device, a second capacitor (3) the field lines (9) of which extend into said pane (7) being disposed on said pane for compensating for temperature differences, said precision capacitor (2) comprising a first electrode (4) and a second electrode (5), said second electrode (5) being implemented as a common electrode for the precision capacitor (2) and for said second capacitor (3), said second capacitor (3) comprising a third electrode (6) beside said second electrode (5) and said second capacitor (3) being substantially configured like said precision capacitor (2),
**characterized in that** said second electrode (5) has the shape of a stylized flattened eight, that said second electrode (5) is wound in such a manner about said first electrode (4) that they are spaced a substantially constant distance apart and that said first electrode (4) is configured in the shape of a narrow rectangle with rounded angles.

2. The sensor arrangement as set forth in claim 1, **characterized in that** the second capacitor (3) is devised so that its field lines extend between its electrodes (4, 5) and the surface of the pane (7) that is turned away from said electrodes (4, 5).

3. The sensor arrangement as set forth in claim 1 or 2, **characterized in that** the second capacitor (3) is disposed on the printed circuit board (1).

4. The sensor arrangement as set forth in any one of the claims 1 through 3, **characterized in that** the precision capacitor (2) and the second capacitor (3) are configured in the fashion of an unfolded capacitor.

5. The sensor arrangement as set forth in any one of the claims 1 through 4, **characterized in that** the evaluation device is disposed on the printed circuit board (1).

## Revendications

1. Ensemble détecteur destiné à détecter l'humidité et/ou des gouttes sur une surface d'une vitre (7), en particulier sur un pare-brise d'un véhicule automobile, comprenant une carte de circuits imprimés (1), un condensateur de mesure (2) disposé sur ladite carte de circuits imprimés (1) et destiné à détecter l'humidité et/ou des gouttes, ainsi qu'un dispositif d'évaluation, un second condensateur (3) étant disposé sur la vitre pour une compensation de différences de température, dont les lignes de champ (9) s'étendent jusque dans la vitre (7), ledit condensateur de mesure (2) présentant une première électrode (4) et une deuxième électrode (5), ladite deuxième électrode (5) étant réalisée comme électrode commune pour le condensateur de mesure (2) et pour le second condensateur (3), ledit second condensateur (3) présentant - outre la deuxième électrode (5) - une troisième électrode (6), et ledit second condensateur (3) est conçu pour l'essentiel comme le condensateur de mesure (2), **caractérisé par le fait que** ladite deuxième électrode (5) présente la forme d'un huit aplati stylisé, que l'on fait passer la deuxième électrode (5) autour de la première électrode (4) de manière à avoir une distance pour l'essentiel constante entre les deux, et que la première électrode (4) est réalisée sous forme d'un rectangle étroit à angles arrondis.

2. Ensemble détecteur selon la revendication 1, **caractérisé par le fait que** le second condensateur (3) est conçu de manière à ce que ses lignes de champ s'étendent entre ses électrodes (4, 5) et la surface de la vitre (7), qui montre dans la direction opposée aux électrodes (4, 5).

3. Ensemble détecteur selon la revendication 1 ou 2, **caractérisé par le fait que** ledit second condensateur (3) est disposé sur la carte de circuits imprimés (1).

4. Ensemble détecteur selon l'une quelconque des revendications 1 à 3, **caractérisé par le fait que** le condensateur de mesure (2) et le second condensateur (3) sont réalisés à la manière d'un condensateur relevé.

5. Ensemble détecteur selon l'une quelconque des revendications 1 à 4, **caractérisé par le fait que** ledit dispositif d'évaluation est disposé sur la carte de circuits imprimés (1).
